# EUROPEAN PATENT APPLICATION

(11) **EP 1 975 576 A1**
(43) Date of publication of application: **01.10.2008**
(21) Application number: 07105329.2
(22) Date of filing: 30.03.2007
(51) Int. Cl.: G01F 25/00, G01F 15/02

(54) **Flow meter system calibration**

(71) Applicant: Dresser Wayne AB, 200 61 Malmö (SE)
(72) Inventor: Isaksson, Patrik, 217 42, Malmö (SE); Thorkelsson, Ola, 27144 Ystad (SE); Roos, Lennart, 21613 Limhamn (SE)
(74) Representative: Milanov, Nina Vendela Maria

(57) **Abstract**

A method for calibrating a flow meter system in a fuel pump unit is presented. The fuel pump unit is configured to dispense a liquefied fuel gas at an superatmospheric operation pressure, where the method comprises the steps of a) passing a reference volume of calibration fluid through the flow meter system, b) registering the reference volume, by the flow meter system, as a registered volume, and c) comparing the registered volume with the reference volume to determine a correction function that compensates for the deviation of the registered volume from the reference volume. The method is further characterised in that a liquid is used as the calibration fluid, at steps a) and b) a calibration pressure is used that lies below the vapour pressure of said liquefied fuel gas, the correction function is modified to compensate for differences between the fluid properties of the calibration liquid at the calibration pressure and the fluid properties of the liquefied fuel gas at the operation pressure, and that the flow meter system is adjusted by the modified correction function such that its measured volume corresponds to the volume of liquefied fuel gas dispensed at operation pressure.

## Description

### Technical Field

The present invention relates to a method for calibrating a flow meter system in a fuel pump unit wherein said fuel pump unit is configured to dispense a liquefied fuel gas at an superatmospheric operation pressure.

### Background Art

Fuel pump units are generally equipped with some kind of volume determining apparatus in order to determine the amount of dispensed fuel. Such volume determining apparatus must be able to accurately determine the dispensed volume at different flow rates and for different volumes. It should also be able to indicate the correct volume continuously during filling-up. To achieve such accuracy, the apparatus must be calibrated in manufacture and subsequently at regular intervals.

Today, vehicles may be equipped with internal combustion engines operated by e.g. either gasoline or liquefied fuel gas (LFG). The term "liquefied fuel gas" means any fuel that is gaseous at ambient conditions, i.e. at normal temperature and pressure. For distribution such fuel gases are conveniently converted into liquids by the use of pressure. As examples of such liquefied fuel gases may be mentioned liquefied petroleum gas (LPG), autogas or liquefied natural gas (LNG).

As a consequence, fuel pump units must be able to dispense different kinds of fuel to vehicles. Today, fuel pump units are not configured to dispense both gasoline and LFG, but different types of fuel pump units are used for gasoline and LFG. This is due to the fact that dispensing LFG requires a pressurised system, and a pressure drop to atmospheric pressure along the fuel line will cause the LFG to evaporate. Typically, a LFG dispensing pump unit operates under 5-25 Bar, preferably 10-20 Bar and thus, calibrating a fuel pump unit configured to dispense LFG must be performed under high pressure. This is contrary to fuel pump units for dispensing gasoline where calibration is performed at substantially atmospheric pressure.

A volume determining apparatus of a LFG dispensing fuel pump unit must be calibrated before use and subsequently at regular intervals, e.g. annually. The calibration must be performed under high pressure, typically 10-20 Bar, and requires specific equipment configured to operate under such high pressure. The equipment must be capable of determining not only volume, but also temperature and pressure. This calibration equipment is expensive and differs from the calibration equipment used for gasoline pump units. Usually, the calibration equipment is carried by heavy trucks and is operated by authorised personnel who transport the equipment between different installation sites and carry out the calibration on-site.

When calibrating a LFG dispensing pump unit the calibration equipment is attached to the fuel pump unit. LFG is dispensed into said calibration equipment, and the dispensed volume is measured by the volume determining apparatus of the fuel pump unit as well as by the calibration equipment. In addition, the calibration equipment monitors the pressure and temperature of the LFG, since the volume of the LFG varies with these parameters. The calibration equipment is then detached from the fuel pump unit, and the volume determining apparatus is adjusted in order to finalize the calibration. After calibration, the fuel pump unit is connected to a LFG reservoir.

### Summary of the invention

It is an object of the present invention to provide an improvement of the above prior art technique.

A particular object is to provide a method for calibrating a flow meter system in a fuel pump unit being configured to dispense a liquefied fuel gas, where the calibrating is performed at a lower pressure than the operation pressure, more particularly a pressure below the vapour pressure of the liquefied fuel gas.

Hence a method for calibrating a flow meter system in a fuel pump unit is provided, said fuel pump unit being configured to dispense a liquefied fuel gas at an superatmospheric operation pressure. The method comprises the steps of a) passing a reference volume of calibration fluid through the flow meter system, b) registering the reference volume, by the flow meter system, as a registered volume, and c) comparing the registered volume with the reference volume to determine a correction function that compensates for the deviation of the registered volume from the reference volume. The method is further characterised in that a liquid is used as the calibration fluid, at steps a) and b) a calibration pressure is used that lies below the vapour pressure of said liquefied fuel gas, the correction function is modified to compensate for differences between the fluid properties of the calibration liquid at the calibration pressure and the fluid properties of the liquefied fuel gas at the operation pressure, and that the flow meter system is adjusted by the modified correction function such that its measured volume corresponds to the volume of liquefied fuel gas dispensed at operation pressure.

The inventive method is advantageous in that a flow meter system may be calibrated without use of an expensive and advanced pressurised system. Thus, a flow meter system may be calibrated during manufacturing of the fuel pump unit instead of during installation on sites.

The reference volume of calibration fluid may be determined by a metering receptacle, which is advantageous in that a simple device is used.

The pressure of the calibration fluid in the metering receptacle may be atmospheric, which is advantageous in that an open metering receptacle may be used.

The method may further comprise the steps of registering the temperature of the calibration liquid, and adjusting the correction function for compensating for the registered temperature's deviation from a predetermined temperature. This is advantageous in that the resulted correction function may compensate for volume changes due to temperature variations. Thus, the correction function may be more accurate.

The step of modifying the correction function may comprise multiplying the correction function with a conversion function, and the conversion function may be obtained by calibrating the flow meter system at operation pressure, by using said liquid fuel gas as calibration liquid. It is sufficient to obtain the conversion function only once, and it may then be used for calibration of a multiple number of flow meter systems. The use of a conversion function is advantageous in that the calibration compensates for differences in fluid properties, such as volume differences between calibration liquid and liquefied fuel gas.

The determined correction function may be a correction factor, which is advantageous in that a simple adjustment of the flow meter system is sufficient.

The determined conversion function may be a conversion factor, which is advantageous in that a simple adjustment of the flow meter system is sufficient.

The operation pressure may be at least four times higher than the calibration pressure, which is advantageous in that a flow meter system may be calibrated using less expensive and less advanced system than the pressurised system used in prior art.

The above and other advantages and characteristics of the present invention will be apparent from the specification below and the appended claims.

### Brief Description of the Drawings

Embodiments of the present invention will now be described, by way of example, with reference to the accompanying schematic drawings, in which
Fig. 1 is a schematic cross-sectional view of a fuel pump unit according to prior art, and
Fig. 2 illustrates a general principle of the present invention.

### Detailed Description of Preferred Embodiments of the Invention

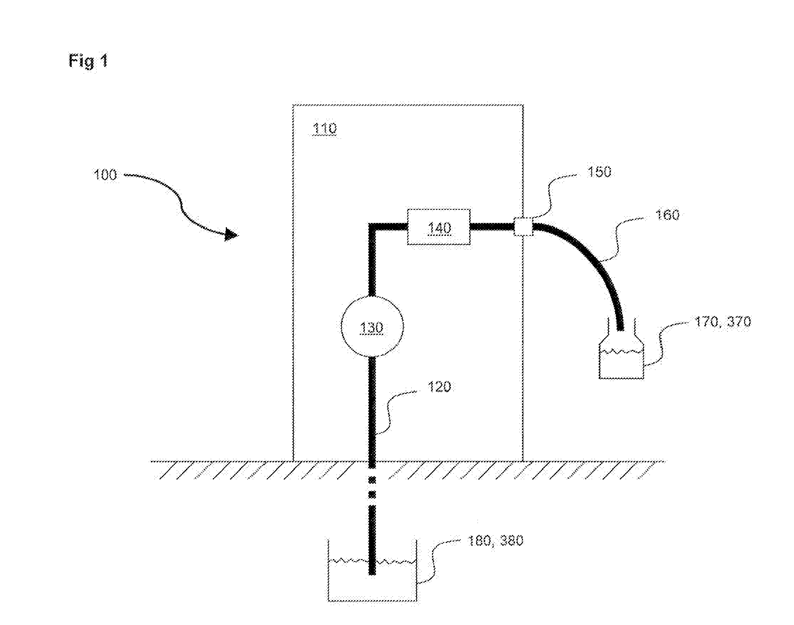

Fig. 1 illustrates a fuel pump unit 100 according to prior art. The fuel pump unit 100 is configured to dispense liquefied fuel gas to an object, e.g. a vehicle, under a superatmospheric operation pressure. The fuel pump unit 100 comprises a fuel pump housing 110, in which a fuel pump 130 and a flow meter system 140 are arranged. The fuel pump 130 is connected to a fuel reservoir 180 by means of a fuel conduit 120. The fuel pump unit 130 may also be arranged outside the fuel pump housing 110, e.g. under ground, and one fuel pump 130 may then be connected to several different fuel pump units 100. For fixed installations of the fuel pump unit 100 such as part of a gas station, the fuel reservoir may be arranged under ground. The fuel conduit 120 further connects the flow meter system 140 with the fuel pump 130 and a connection 150. A flexible hose 160 having a dispensing nozzle (not shown) may be connected to the connection 150.

When the fuel pump unit 100 is to dispense liquefied fuel gas to a receptacle 170, the fuel pump 130 is started and fuel is passed from the fuel reservoir 180, through the fuel conduit 120 via the fuel pump 130 to the flow meter system 140. The flow meter system registers the passed fuel volume, and the fuel is further passed to the connection 150. If a flexible hose 160 having a dispensing nozzle (not shown) is connected to the connection 150, the registered amount of fuel will be dispensed through the nozzle to the receptacle 170.

In order to keep the liquefied fuel gas in a liquid phase, the complete system (the fuel reservoir 180, the fuel conduit 120, the fuel pump 130, the flow meter system 140, the connection 150, the flexible hose 160 and the receptacle 170) must be pressurised. The superatmospheric operation pressure is therefore higher than the vapour pressure of the liquefied fuel gas. When using liquefied petroleum gas, i.e. a composition of propane and butane, the operation pressure in the system is approximately 5-25 Bar. Preferably, the operation pressure is 10-20 Bar, and even more preferably the operation pressure is 13-16 Bar.

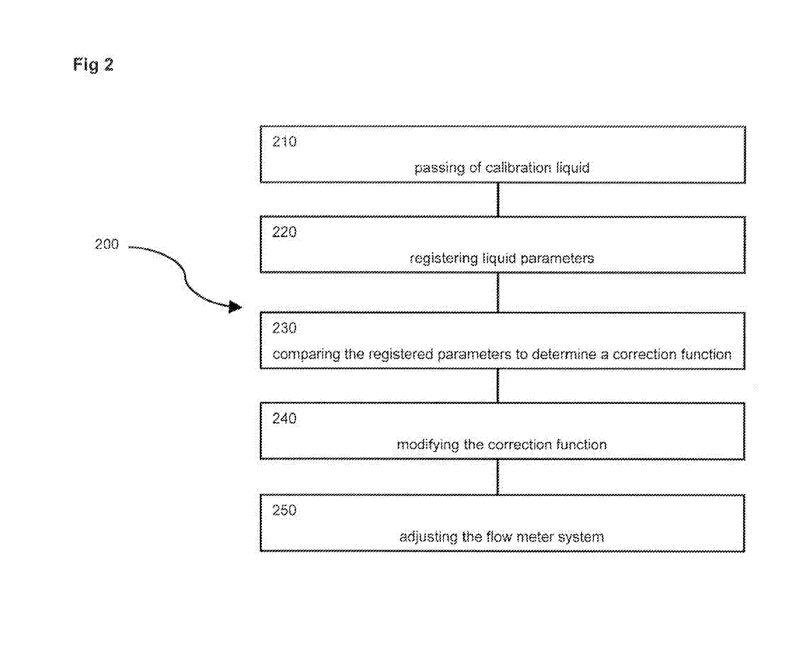

Fig. 2 illustrates the general principle of the present invention. A method 200 for calibrating a flow meter system in a fuel pump unit 100 comprises several steps, each step represented by a box in the figure. At step 210, a reference volume of a calibration liquid is passed through the fuel pump unit 100, and particularly through the flow meter system 140. Calibration liquid parameters including the volume of the calibration liquid are registered by the flow meter system 140 at step 220, and the registered volume is compared to the reference volume at step 230 to determine a correction function. Further, the correction function is modified at step 240, and at step 250 the flow meter system is adjusted. When the flow meter system has been adjusted, the flow meter system is calibrated.

The calibration pressure, defined as the pressure of the calibration liquid during the steps 210 and 220, is lower than the vapour pressure of the liquefied fuel gas dispensed by the fuel pump unit during normal operation.

Before the step 210 of passing calibration liquid through the flow meter system 140, a calibration liquid reservoir 380 is connected to the fuel conduit 120 upstream the fuel pump 130. In this connection the term "calibration liquid" means any fluid that is liquid at ambient conditions, i.e. at normal temperature and pressure. The calibration liquid may be any liquid suitable for calibrating flow meter systems of fuel pump units configured to dispense liquid fuel (such as gasoline) under atmospheric pressure, for example liquid paraffin hydrocarbons such as Norpar^{™}, Isopar^{™} or Alsol^{™}. The reference volume of the passed calibration liquid is determined, for example by a metering receptacle 370 arranged downstream the connection 150. The metering receptacle 370 may be operated under atmospheric pressure, i.e. it may be open.

While passing through the flow meter system 140, fluid properties such as the volume and preferably the temperature of the calibration liquid are registered during step 220. The reference volume of the passed calibration liquid is registered by the flow meter system 140, and the temperature of the calibration liquid is determined by the flow meter system 140 or an external sensor, positioned adjacent to or inside the flow meter system 140. Other sensors can be used to register other fluid properties, such as density, viscosity, etc.

At step 230, the calibration liquid volume registered by the flow meter system 140 is compared to the reference volume of the calibration liquid. The metering receptacle 370 should preferably have the same temperature as the calibration liquid. Steps 210, 220 and 230 may be repeated several times, in order to obtain a plurality of metered volumes. Thus, each of the metered and predetermined reference volumes may be unique, such that the resulting metered and predetermined reference volumes form a set of sample data. The sample data is then used to determine a correction function. The correction function may for example be determined by interpolating the sample data and calculate the quota between the interpolated set of reference volumes and the interpolated set of metered volumes. The correction function may be linear, polynomial, exponential, or any other function. In a simple case, the correction function is a correction factor, i.e. the quota between the mean reference volume and the mean metered volume.

At step 240, the determined correction function is modified to compensate for differences between the fluid properties, such as density, viscosity etc., of the calibration liquid at the calibration pressure and the fluid properties, such as density, viscosity etc., of the liquefied fuel gas at the operation pressure. Such modifying step 240 may be performed by multiplying the correction function with a conversion function.

The conversion function may be obtained by performing a second calibration of a flow meter system, i.e. the steps 210, 220 and 230, on a fuel pump unit configured to dispense liquefied fuel gas, using liquefied fuel gas as calibration fluid. Such second calibration, which is performed under operation pressure as described earlier, is preferably performed only once as a reference calibration, and the reference calibration can then be used for an unlimited number of different flow meter systems. The second calibration may be performed at different temperatures, such that each temperature of the calibration fluid corresponds to a unique part of the reference calibration. The correction function obtained by the reference calibration using liquefied fuel gas as calibration fluid is then used as a conversion function during step 240.

The conversion function is utilised in order to compensate for different volumes between the used calibration liquid under calibration pressure and liquefied fuel gas, that is used during normal operation of the fuel pump unit under operation pressure.

At step 250, the flow meter system is adjusted in order to finalise the calibration. The flow meter system 140 is programmed with the modified correction factor (i.e. the correction factor multiplied with the conversion factor). The flow meter system 140 is thereby adjusted so that the metered volume of calibration liquid under calibration pressure corresponds to the volume of liquefied fuel gas passed therethrough under operation pressure. The flow meter system 140 may be programmed by means of an external computer, changing of an internal memory circuit or by any similar action.

Preferably, the operation pressure is at least four times higher than the calibration pressure. More preferably, the calibration pressure is less than 3 Bar.

The invention has mainly been described above with reference to a few embodiments. However, as is readily appreciated by a person skilled in the art, other embodiments than the ones disclosed above are equally possible within the scope of the invention, as defined by the appended claims.

## Claims

1. A method for calibrating a flow meter system in a fuel pump unit configured to dispense a liquefied fuel gas at an superatmospheric operation pressure, where the method comprises the steps of
a) passing a reference volume of calibration fluid through the flow meter system,
b) registering the reference volume, by the flow meter system, as a registered volume,
c) comparing the registered volume with the reference volume to determine a correction function that compensates for the deviation of the registered volume from the reference volume,
**characterised in that**
a liquid is used as the calibration fluid,
at steps a) and b) a calibration pressure is used that lies below the vapour pressure of said liquefied fuel gas,
the correction function is modified to compensate for differences between the fluid properties of the calibration liquid at the calibration pressure and the fluid properties of the liquefied fuel gas at the operation pressure,
and that the flow meter system is adjusted by the modified correction function such that its measured volume corresponds to the volume of liquefied fuel gas dispensed at operation pressure.

2. The method of claim 1, wherein the reference volume of calibration fluid is determined by a metering receptacle.

3. The method of claim 2, wherein the pressure of the calibration fluid in the metering receptacle is atmospheric.

4. The method of any one of claims 1-3, further comprising the steps of:
- registering the temperature of the calibration liquid, and
- adjusting the correction function for compensating for the registered temperature's deviation from a predetermined temperature.

5. A method according to any one of claims 1-4, wherein the step of modifying the correction function comprises multiplying the correction function with a conversion function.

6. The method of claim 5, wherein the conversion function is obtained by calibrating the flow meter system at operation pressure, by using said liquid fuel gas as calibration liquid.

7. The method of any one of claims 1-6, wherein the determined correction function is a correction factor.

8. The method of any one of claims 5-7, wherein the determined conversion function is a conversion factor.

9. The method of any of claims 1-8, wherein the operation pressure is at least four times higher than the calibration pressure.
